# EUROPÄISCHE PATENTSCHRIFT

(11) **EP 0 968 882 B1**
(45) Veröffentlichungstag und Bekanntmachung des Hinweises auf die Patenterteilung: **17.07.2002**
(21) Anmeldenummer: 99108464.1
(22) Anmeldetag: 30.04.1999
(51) Int. Cl.: B60R 13/04

(54) **Klappdeckelverschluss**
Flip cap closure
Fermeture à couvercle basculant

(30) Priorität: 03.07.1998 DE 19829815
(43) Veröffentlichungstag der Anmeldung: 05.01.2000
(73) Patentinhaber: Schade GmbH & Co. KG, 58840 Plettenberg (DE)
(72) Erfinder: Hoppe, Martin, 58840 Plettenberg (DE); Strautz, Josef, 57439 Attendorn (DE)
(74) Vertreter: Laufhütte, Dieter, Dr.-Ing.

(56) Entgegenhaltungen:
- DE-A- 3 743 941
- DE-A- 3 942 795
- DE-A- 4 237 158
- DE-C- 4 213 464
- FR-A- 2 687 964

## Beschreibung

Die vorliegende Erfindung betrifft einen Klappdeckelvers chluß mit einer Klappe zum Verschließen einer in einer Abdeckleiste vorgesehenen Öffnung zur Aufnahme der Stützfüße eines Dachlastträgers, wobei an der Klappe Achsansätze vorgesehen sind, mittels derer die Klappe verschwenkbar ist, sowie mit Lagerelementen, in denen die Achsansätze drehbar aufgenommen sind.

Derartige Klappdeckelverschlüsse dienen dazu, die in Abdeckleisten von Fahrzeugdächern vorgesehenen Öffnungen bündig zu verschließen und im Bedarfsfall die Zugänglichkeit der Öffnung zu ermöglichen. In den Öffnungen sind die Stützfüße von Dachlastträgern aufnehmbar und fixierbar. Eine wichtige Anforderung an den Klappdeckelverschluß ist nicht nur die Wahrung der optischen Einheitlichkeit durch weitgehend bündiges Abschließen mit der Abdeckleiste im geschlossenen Zustand, sondern auch die Fixierung der Klappe in der geöffneten und in der geschlossenen Position.

Aus der gattungsgemässen DE-PS 42 37 158 ist eine Abdeckleiste für eine in ein Fahrzeugdach eingelassene Rinne zur Aufnahme eines Dachlastenträgers bekannt. Die Öffnung der Abdeckleiste wird durch eine Klappe verschlossen, die mittels Lagerstiften verschwenkbar ist, wobei die Lagerstifte in einer Ausnehmung der Abdeckleiste drehbar aufgenommen sind. Die Offen- und Schließstellung der Klappe wird durch ein Federelement gesichert, das in beiden Positionen mit entsprechenden Kontaktflächen der Klappe formschlüssig in Verbindung tritt und die Klappe auf diese Weise in den gewünschten Positionen arretiert. Das Federelement erstreckt sich in der durch die Abdeckleiste verschlossenen Dachrinne und ist an einem Profilschenkel der Abdeckleiste eingerastet. Ferner sind Schiebemechanismen bekannt, die aus einem Schieberdeckel, einem Federelement und einem Gleitstück bestehen, das auf einer Führungsbahn in der Abdeckleiste bewegt werden kann. Durch die Schiebebewegung werden die Schließstellung und Offenstellung des Schiebers realisiert.

Sowohl dem aus der DE-PS 42 37 158 bekannten Klappmechanismus als auch derartigen Schiebemechanismen ist es nachteilig, daß diese aufgrund der verhältnismäßig großen Zahl von Einzelteilen aufwendig hergestellt und montiert werden müssen.

Es ist die Aufgabe der vorliegenden Erfindung eine Verschlußvorrichtung für die Öffnung einer Abdeckleiste zu schaffen, die einfach herstellbar und montierbar ist.

Diese Aufgabe wird ausgehend von einem gattungsgemäßen Klappdeckelverschluß dadurch gelöst, daß wenigstens eines der Lagerelemente ein Federelement sowie ein Arretierungselement aufweist, wobei das Arretierungselement derart ausgeführt ist, daß dieses in der Schließ- sowie in der Offenstellung der Klappe in Drehrichtung der Klappe formschlüssig mit dem in dem Lagerelement aufgenommenen Achsansatz in Verbindung steht, und wobei das Federelement derart angeordnet ist, daß die Klappe entgegen der vom Federelement ausgeübten Federkraft aus einer arretierten Position verschwenkbar ist.

Der erfindungsgemäße Klappdeckelverschluß weist somit nur drei Bauteile auf, da ein separates Federelement, das den Klappdeckel in einer arretierten geschlossenen oder offenen Position halten soll, nicht notwendig ist. Die Funktion des Federelementes wird erfindungsgemäß durch die Lagerelemente bzw. durch eine entsprechende Ausführung der Achsansätze der Klappe übernommen. Dazu ist das Arretierungselement des Lagerelementes derart ausgeführt, daß dieses in den Grenzpositionen (vollständig offen oder geschlossen) der Klappe formschlüssig mit dem aufgenommenen Achsansatz in Verbindung steht. Soll die Klappe aus einer Grenzposition bewegt werden, muß entsprechend der erfindungsgemäßen Anordnung des ebenfalls in dem Lagerelement angeordneten Federelementes dessen Federkraft überwunden werden. Dadurch wird erreicht, daß die in die Schließ- oder Offenstellung verschwenkte Klappe in diesen Positionen sicher gehalten wird und nur gegen die Federkraft des Federelementes verschwenkbar ist.

Besonders vorteilhaft ist es, wenn das Arretierungselement das Federelement umfaßt. Eine derartige Ausgestaltung ist beispielsweise dann denkbar, wenn das Federelement als federnde Lasche ausgeführt ist, auf deren Oberfläche der Achsansatz in Drehrichtung der Klappe formschlüssig aufgenommen ist.

In weiterer Ausgestaltung der vorliegenden Erfindung ist vorgesehen, daß das Federelement derart ausgeführt ist, daß auf den Achsansatz eine radial auf diesen wirkende Kraft ausübbar ist.

Besonders vorteilhaft ist es, wenn wenigstens einer der Achsansätze einen im wesentlichen L-förmigen Bereich aufweist, und der Achsansatz derart angeordnet ist, daß je einer der Schenkel des L-förmigen Bereiches in der Schließ- sowie in der Offenstellung auf einer Fläche des Federelementes aufliegt, die durch das Verschwenken der Klappe bewegbar ist. In diesem Fall wird das Arretierungs- und Federelement beispielsweise durch eine federnd ausgeführte Lasche gebildet, auf deren Oberfläche ein Schenkel des L-förmigen Bereiches des Achsansatzes aufliegt. Soll die Klappe aus dieser Position verschwenkt werden, erfolgt eine entsprechende Drehung des L-förmigen Bereiches des Achsansatzes und eine daraus resultierende Biegebewegung der federnden Lasche. Wird die Klappe weiter gedreht, schwenkt die federnde Lasche entsprechend zurück, bis der zweite Schenkel des L-förmigen Bereiches des Achsansatzes auf der Oberfläche des Federelementes aufliegt. Entsprechend ergibt sich, daß ein Herausbewegen der Klappe aus einer der Grenzpositionen stets nur unter Aufbringen der Federkraft der Lasche möglich ist

In weiterer Ausgestaltung der vorliegenden Erfindung ist vorgesehen, daß das Lagerelement zwei Bereiche zur Lagerung des Achsansatzes aufweist, zwischen denen das Federelement angeordnet ist.

Gemäß einer bevorzugten Ausgestaltung der vorliegenden Erfindung ist das Federelement derart ausgeführt, daß auf den Achsansatz eine axial auf diesen wirkende Kraft ausübbar ist. Dabei kann das Federelement als elastisch verformbarer Bereich der Wandung des Lagerelementes ausgeführt sein.

Besonders vorteilhaft ist es, wenn der Achsansatz wenigstens einen sich axial erstreckenden Vorsprung aufweist, der in in Umfangsrichtung beabstandeten Aussparungen des Lagerelementes aufnehmbar ist. Soll die Klappe aus der arretierten Position verschwenkt werden, ist es erforderlich, daß sich der Vorsprung des Achsansatzes aus einer der Aussparungen des Lagerelementes herausbewegt. Dies führt dazu, daß das Lagerelement um einen entsprechenden Betrag in axialer Richtung gedehnt wird. Eine derartige Dehnung wird dadurch ermöglicht, daß beispielsweise die Wandung des Lagerelementes elastisch ausgeführt ist oder elastische Bereiche aufweist. Erreicht der sich axial erstreckende Vorsprung des Achsansatzes die gewünschte Aussparung des Lagerelementes, zieht sich der elastisch verformbare Bereich der Wandung des Lagerelementes wieder zusammen und arretiert auf diese Weise die Klappe in der entsprechenden Offen- oder Schließposition.

Der Achsansatz kann einen Bereich vergrößerten Durchmessers aufweisen, und der sich axial erstreckende Vorsprung kann an einer Stirnfläche dieses Bereiches angeordnet sein. Dadurch ist es möglich, den sich in axialer Richtung erstreckenden Vorsprung an einer beliebigen axialen Position des Achsansatzes vorzusehen.

In weiterer Ausgestaltung der vorliegenden Erfindung ist vorgesehen, daß die Lagerelemente als Kunststoff-Formteile ausgeführt sind. Hierdurch ergibt sich der Vorteil, daß die Lagerelemente in einer großen Vielzahl bzw. in entsprechend vielfältigen unterschiedlichen Ausführungsformen einfach hergestellt werden können. Dadurch ist es möglich, den erfindungsgemäßen Klappdeckelverschluß an unterschiedlich ausgeführte Abdeckleisten verschiedener Fahrzeugtypen anzupassen.

In weiterer Ausgestaltung der vorliegenden Erfindung ist vorgesehen, daß die Lagerelemente auf ihren Außenseiten Vorsprünge zur Arretierung in der Abdeckleiste aufweisen. Dabei werden die Lagerelemente zur Montage einfach an der gewünschten Position in die Abdeckleisten eingeführt und hier eingerastet.

Weitere Einzelheiten und Vorteile der vorliegenden Erfindung werden anhand eines in der Zeichnung dargestellten Ausführungsbeispiels näher erläutert. Es zeigen:
- Fig. 1:: Eine Querschnittsansicht einer Dachrinne mit Abdeckleiste und eingefügtem Klappdeckelverschluß,
- Fig. 2:: eine auseinandergezogene Darstellung von Abdeckleiste, Klappe und Lagerelementen,
- Fig. 3:: eine perspektivische Ansicht eines in einem Lagerelement aufgenommenen Achsansatzes der Klappe,
- Fig. 4:: eine Draufsicht auf einen in einem Lagerelement aufgenommenen Achsansatz der Klappe mit Schnittbezeichnungen,
- Fig. 5:: eine perspektivische Ansicht der durch den erfindungsgemäßen Klappdeckelverschluß verschlossenen Abdeckleiste sowie die Schnittdarstellungen gemäß der Schnittlinien nach Fig. 4,
- Fig. 6:: eine perspektivische Ansicht der Abdeckleiste mit dem erfindungsgemäßen Klappdeckelverschluß in geöffneter Position sowie den entsprechenden Schnittdarstellungen gemäß Fig. 4,
- Fig. 7:: eine vergrößerte Darstellung der Schnittansicht gemäß Schnitt BB in unterschiedlichen Drehwinkeln der Klappe und Auslenkungen des Federelementes,
- Fig. 8:: eine perspektivische Darstellung eines in einem Lagerelement aufgenommenen Achsansatzes der Klappe mit axialer Krafteinleitung,
- Fig. 9:: eine perspektivische Darstellung des Achsansatzes der Klappe gemäß Fig. 8,
- Fig. 10:: eine perspektivische Darstellung des Lagerelementes gemäß Fig. 8 und
- Fig. 11:: eine perspektivische Darstellung des Lagerelementes mit Achsansatz und Klappe nach Fig. 8 in einer Ansicht von unten.

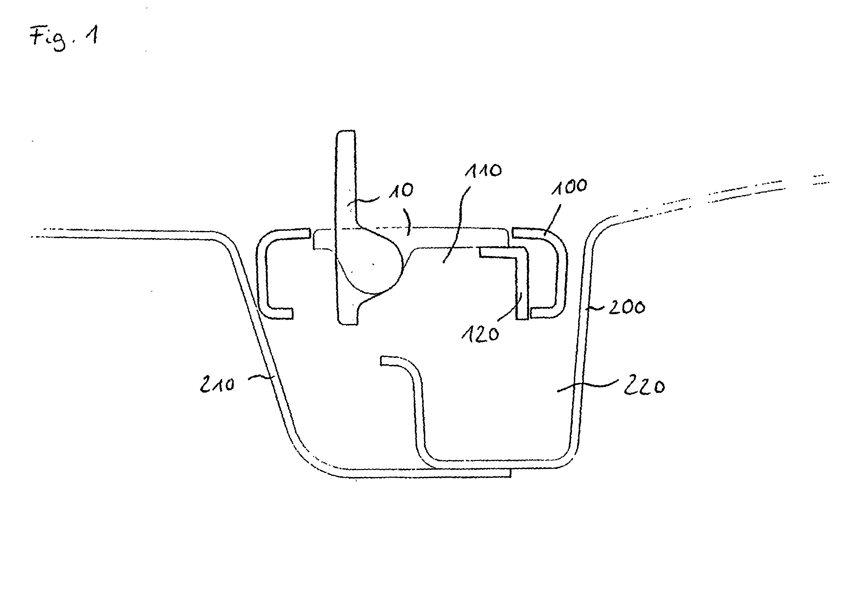

Fig. 1 zeigt eine Querschnittsansicht der Dachrinne 220, die sich an gegenüberliegenden Längsrändern des Daches eines Personenkraftwagens befindet. In der Dachrinne 220 ist die Dachhaut 200 mit der Seitenwand 210 verbunden.

Die Dachrinne 220 wird durch die Abdeckleiste 100 bedeckt. In der Abdeckleiste 100 befindet sich die Öffnung 110, die dazu dient, die Stützfüße eines nicht dargestellten Dachlastträgers aufzunehmen und zu fixieren. Die Öffnung 110 ist durch die Klappe 10 verschließbar, die in Fig. 1 in einer geöffneten sowie in einer geschlossenen Position dargestellt ist. Die Klappe 10 liegt im geschlossenen Zustand auf der Stütze 120 auf.

Bei Nichtgebrauch des Dachlastträgers wird die Öffnung 110 durch die Klappe 10 verschlossen und erst im Bedarfsfall geöffnet.

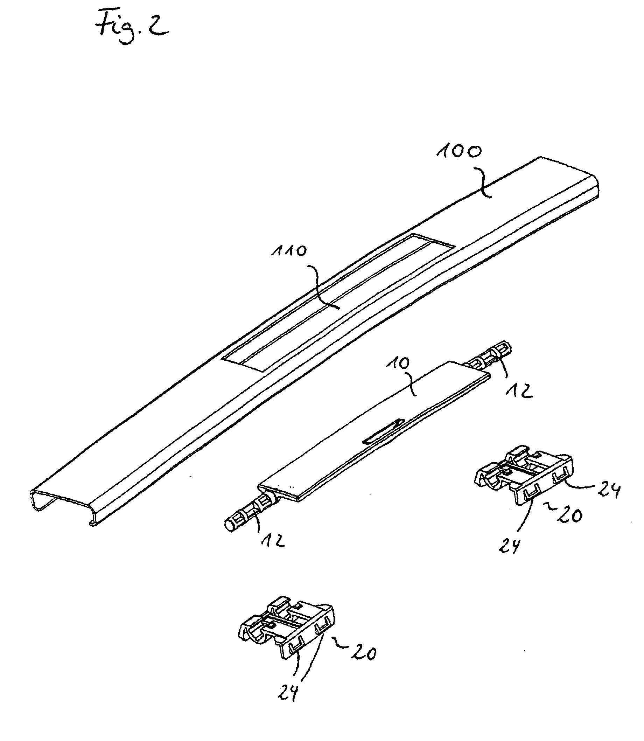

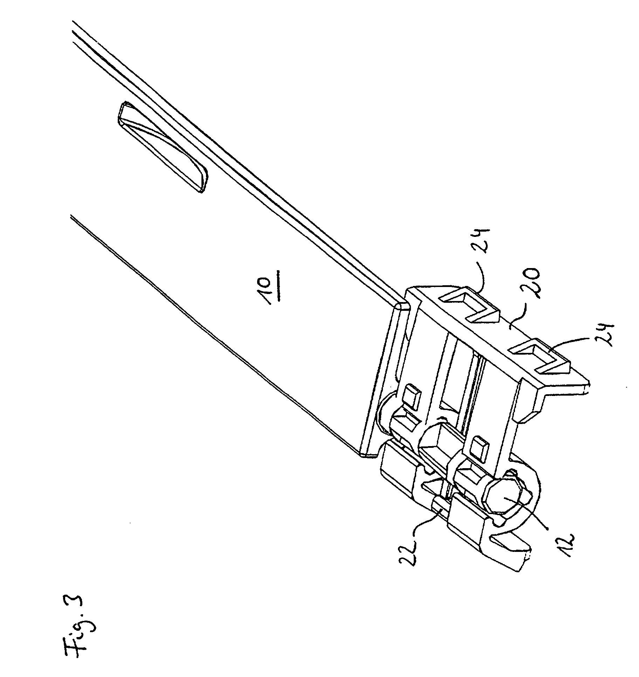

Fig. 2 zeigt in einer perspektivischen und auseinandergezogenen Darstellung einen Ausschnitt der Abdeckleiste 100 mit Öffnung 110, die Klappe 10 sowie die Lagerelemente 20. Die Klappe 10 weist in ihren Endbereichen jeweils einen Achsansatz 12 auf. Die Achsansätze 12 sind im montierten Zustand in den Lagerelementen 20 aufgenommen, wie dies in Fig. 3 dargestellt wird. In Fig. 3 ist femer das Arretierungs- und Federelement 22 erkennbar. Dieses erstreckt sich als federnde Lasche zwischen Bereichen zur Lagerung des Achsansatzes 12.

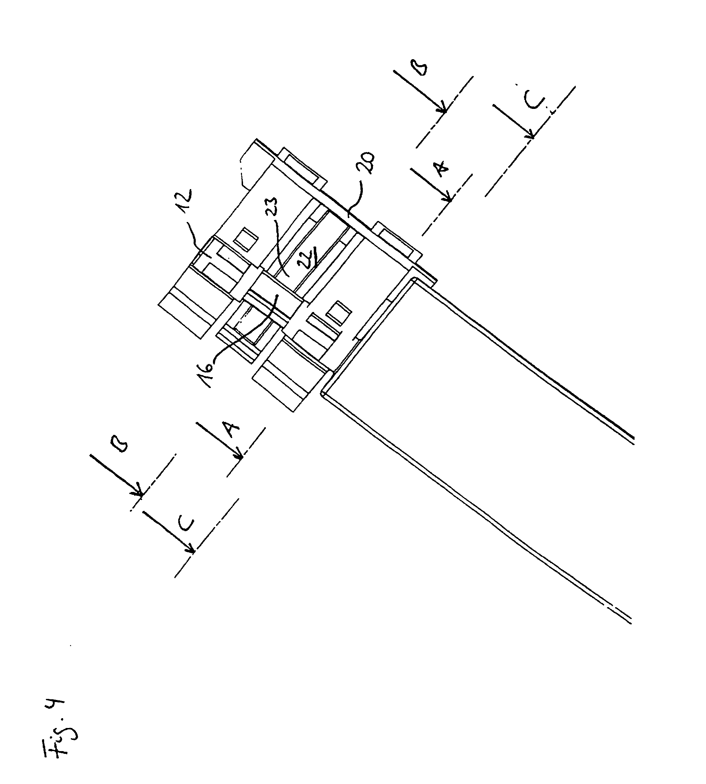

Die Anordnung des Arretierungs- und Federelementes 22 wird ferner aus der Draufsicht gemäß Fig. 4 deutlich. Hier ist erkennbar, daß sich das Arretierungs- und Federelement 22 zwischen den Bereichen zur Lagerung des Achsansatzes 12 befindet. Das Arretierungs- und Federelement 22 ist als Lasche ausgeführt, die gemäß dem vorliegenden Ausführungsbeispiel an der rechts dargestellten Wandung des Lagerelementes 20 fixiert ist. Der Achsenansatz 12 ist gemäß Fig. 4 von oben in das Lagerelement einführbar, wobei der Durchmesser der entsprechenden Öffnung derart ausgelegt ist, daß der Achsansatz 12 in die entsprechenden Ausnehmungen des Lagerelementes 20 einrastbar ist.

Im Bereich des Arretierungs- und Federelementes 22 ist der L-förmige Bereich 16 des Achsansatzes 12 angeordnet. Dieser liegt mit einem Schenkel auf der Oberfläche 23 des Arretierungs- und Federelementes 22 auf und wird hier in Drehrichtung des Achsansatzes 12 formschlüssig gehalten.

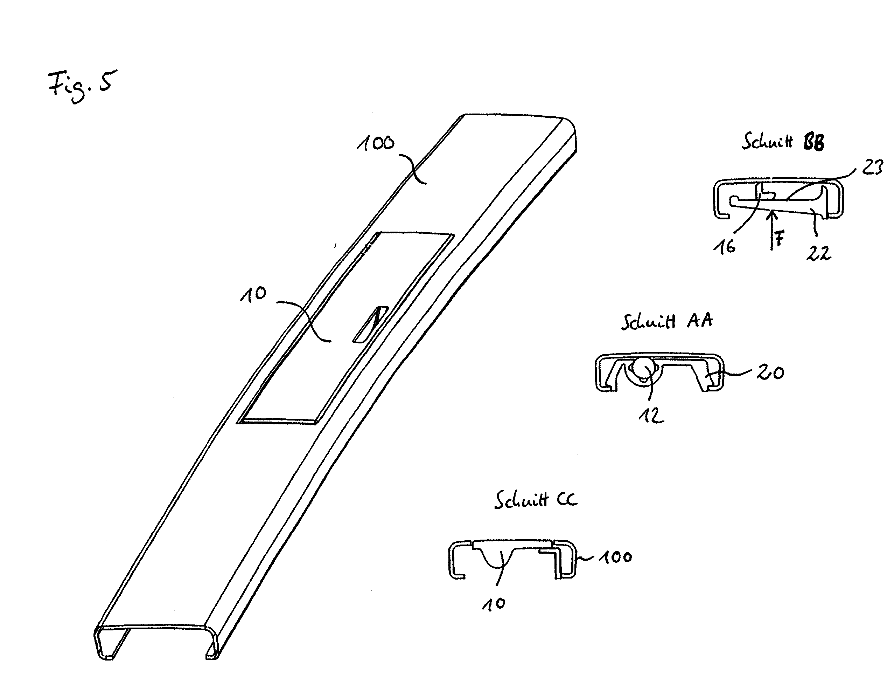

In Fig. 5, links ist eine perspektivische Darstellung der Abdeckleiste 100 mit dem erfindungsgemäßen Klappdeckelverschluß mit Klappe 10 dargestellt. Fig. 5, rechts zeigt die drei Schnittansichten gemäß der in Fig. 4 gekennzeichneten Schnitte.

Die Schnittdarstellung gemäß Linie BB zeigt das Arretierungs- und Federelement 22 sowie den L-förmigen Bereich 16, dessen einer Schenkel auf der Fläche 23 des Arretierungs- und Federelementes 22 aufliegt. Die Schnittdarstellung gemäß Linie AA verdeutlicht den Bereich des Lagerelementes 20, der zur Aufnahme der zur Lagerung der Klappe dienenden Bereiche des Achsansatzes 12 dient. In der Schnittdarstellung CC ist die bündig mit der Abdeckleiste 100 abschließende geschlossene Klappe 10 dargestellt.

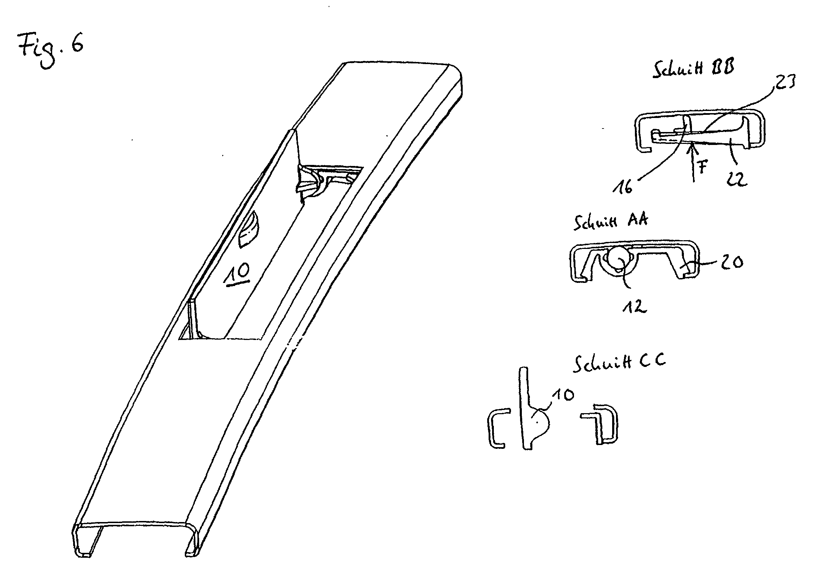

Die Darstellung gemäß Fig. 6 ergibt sich aus der perspektivischen Ansicht gemäß Fig. 5 nach dem Öffnen der Klappe 10. Fig. 6 rechts zeigt die Schnitte gemäß den in Fig. 4 definierten Schnittebenen. Die Schnittansicht BB verdeutlicht, daß der L-förmige Bereich 16 nunmehr mit dem anderen der Schenkel auf der Fläche 23 des Arretierungs- und Federelementes 22 aufliegt. Wenigstens während des Verschwenkens der Klappe 10 wirkt die Federkraft F auf den L-förmigen Bereich 16 des Ansatzstückes 12 und bewirkt, daß die Klappe 10 entsprechend in dieser Position oder in der geschlossenen Position gemäß Fig. 5 gehalten wird. Entsprechend dient das Arretierungs- und Federelement 22 zur Arretierung durch Formschluß in Drehrichtung der Klappe 10 sowie zur Sicherung des arretierten Zustandes durch Aufbringen der Federkraft F.

Die Schnittdarstellung gemäß Schnitt AA zeigt einen Lagerungsbereich des Achsansatzes 12 der in einer entsprechenden Ausnehmung des Lagerelementes 20 aufgenommen ist. In Schnitt CC ist die Klappe 10 in ihrer nunmehr geöffneten Position dargestellt.

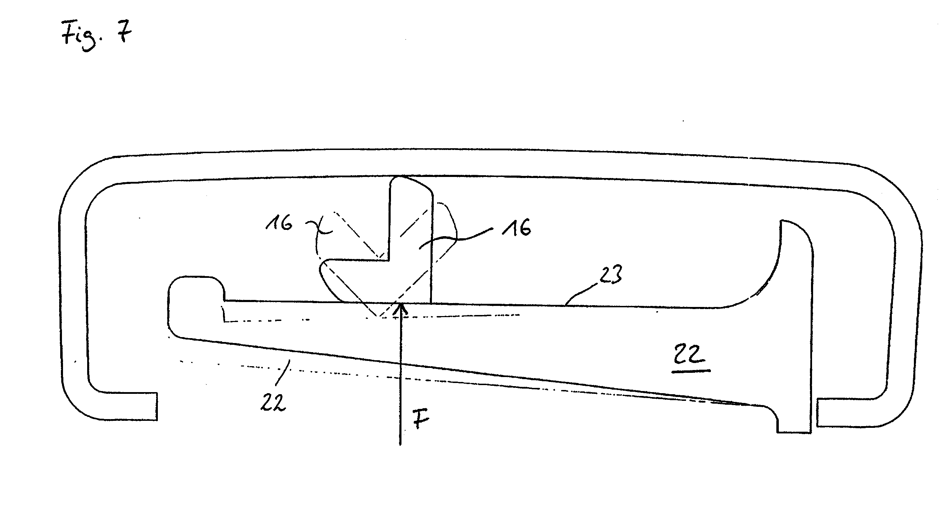

Fig. 7 verdeutlicht die Funktion des Arretierungs- und Federelementes 22 während und nach dem Verschwenken der Klappe von der geschlossenen in die geöffnete Position. Ausgehend von der in Fig. 5 dargestellten geschlossenen Position wird die Klappe 10 gemäß dem vorliegenden Ausführungsbeispiel im Gegenuhrzeigersinn verschwenkt, was dazu führt, daß der L-förmige Bereich 16 des Ansatzstückes 12 entsprechend verdreht wird. Hierdurch wird das als Lasche ausgebildete Arretierungs- und Federelement 22 geringfügig aus seiner ursprünglichen Position herausbewegt, wozu dessen Federkraft F überwunden werden muß. Diese Position ist durch die gestrichelte Darstellung des Arretierungs- und Federelementes 22 sowie des L-förmigen Bereiches 16 angedeutet.

Wird die Klappe weiter im Gegenuhrzeigersinn in die vollständig geöffnete Position gemäß Fig. 6 verschwenkt, liegt einer der Schenkel des L-förmigen Bereichs 16 flächig auf der Fläche 23 des Arretierungs- und Federelementes 22 auf. In diesem Zustand ist die Klappe 10 vollständig geöffnet und durch das Arretierungs- und Federelement 22 in dieser Position gesichert.

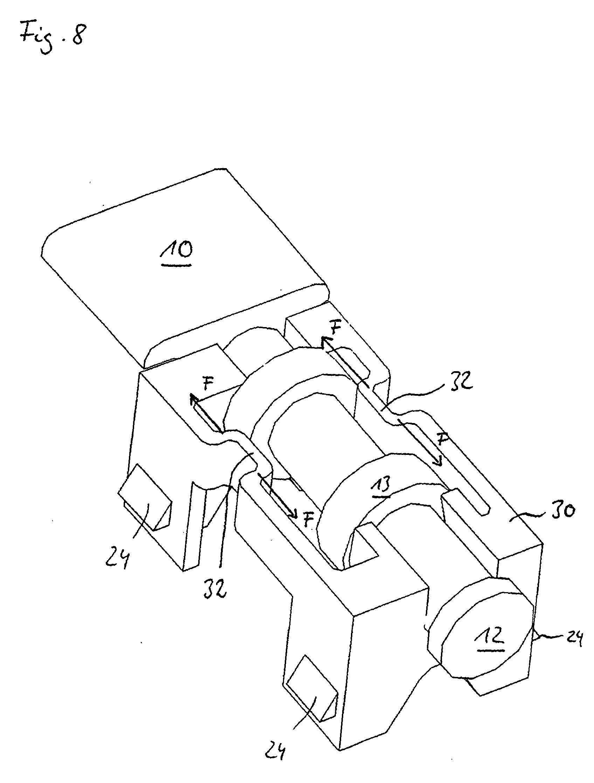

Fig. 8 zeigt das Lagerelement 30 und ein darin aufgenommenes Ansatzstück 12 der Klappe 10. Als Federelement 32 ist hier ein elastisch verformbarer Bereich der Wandung des Lagerelementes ausgeführt. Wird die Klappe 10 aus der in Fig. 8 dargestellten geschlossenen Position herausbewegt kommt es aufgrund der Ausführung des Ansatzstückes 12 zu einer geringfügigen axialen Verschiebung des rechts dargestellten Bereiches des Lagerelementes 30. Diese Verschiebung wird dadurch ermöglicht, daß der das Federelement 32 darstellende Bereich der Wandung elastisch verformbar ausgeführt ist.

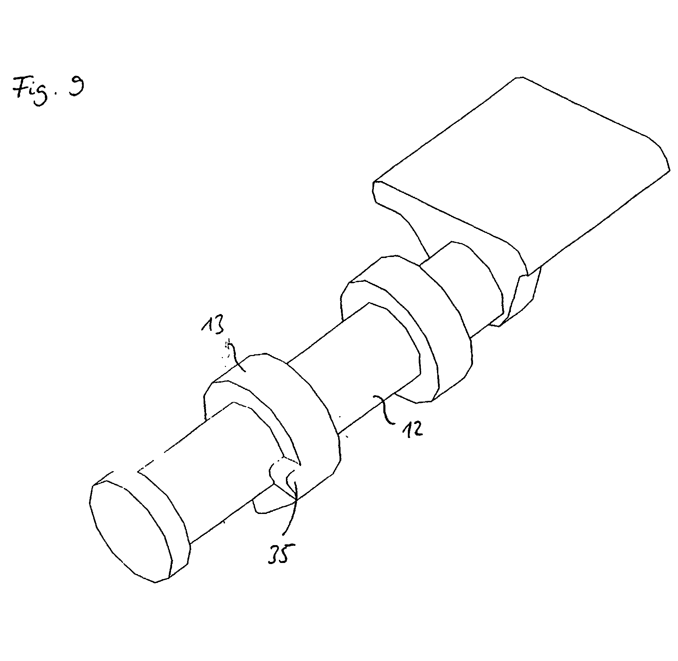

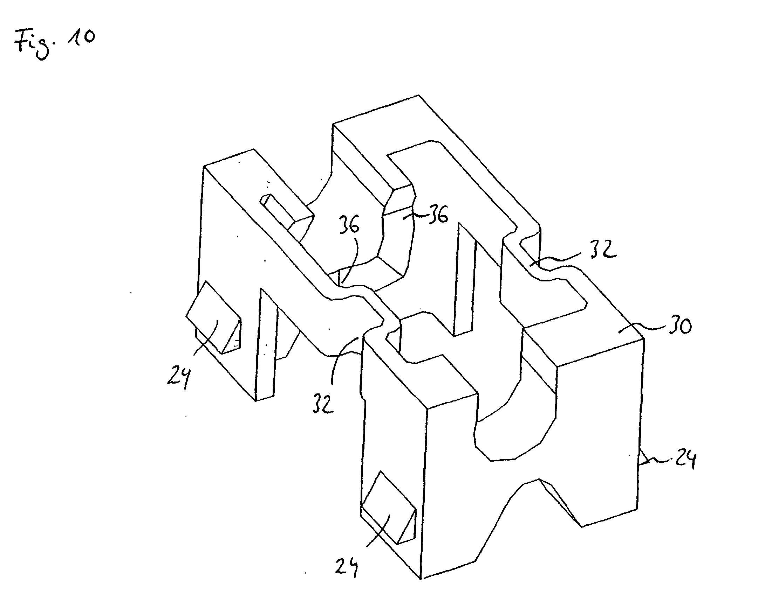

Die axiale Verschiebung wird dadurch bewirkt, daß der im Durchmesser vergrößerte Bereich 13 des Achsansatzes 12 den sich axial erstreckenden Vorsprung 35 aufweist (s. Fig. 9). Dieser greift in den Grenzpositionen der Klappe 10 in die in Umfangsrichtung beabstandeten Aussparungen 36 des in Abbildung 10 dargestellten Lagerelementes 30 ein. Es können ein oder mehrere Vorsprünge vorgesehen sein, wobei in diesem Fall auch eine entsprechend größere Anzahl von Aussparungen benötigt wird.

Wird die Klappe 10 aus der Offen- oder Schließposition herausbewegt, wird der Vorsprung 35 entsprechend relativ zu den Aussparungen 36 verdreht. Der Vorsprung 35 verschiebt dabei aufgrund seiner axialen Ausrichtung den in Abbildung 10 hinten angeordneten Bereich des Lagerelementes 30 geringfügig in axiale Richtung. Der als Federelement 32 ausgeführte Bereich der Wandung wird dadurch gedehnt, wozu die Federkraft F aufzubringen ist. Wird der Vorsprung 35 beim weiteren Verschwenken in der gewünschten Aussparung 36 aufgenommen, zieht sich entsprechend der geringeren axialen Ausdehnung der elastisch verformbare Bereich wieder zusammen und sichert auf diese Weise, daß der Vorsprung 35 in der Aussparung 36 sicher gehalten wird.

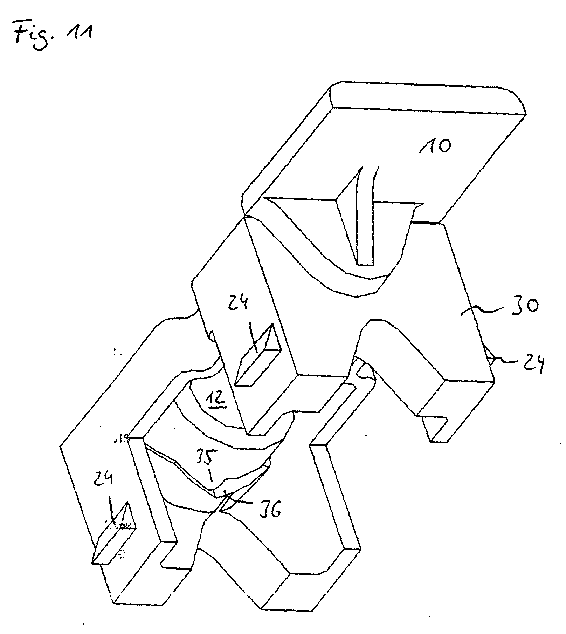

Fig. 11 zeigt in einer perspektivischen Ansicht von unten das Lagerelement 30 mit Achsansatz 12 und Klappe 10. Die Klappe 10 befindet sich in der geschlossenen Position und wird in dieser durch den in der Aussparung 36 gehaltenen Vorsprung 35 fixiert.

Insbesondere die Fig. 2, 3, 8, 10 und 11 verdeutlichen, daß die Lagerelemente 20, 30 auf ihren Außenseiten Vorsprünge 24 aufweisen, mittels derer diese in der Abdeckleiste 100 arretierbar sind. Dadurch wird es möglich, die Lagerelemente 20, 30 in die Abdeckleiste 100 einzustecken und darin zu arretieren.

Der erfindungsgemäße Klappdeckelverschluß verfügt über eine zuverlässige Funktionsweise und ist darüber hinaus einfach herstellbar und montierbar. Durch die Reduzierung der Zahl der Einzelteile und die sich entsprechend ergebende Montagefreundlichkeit wird eine wesentliche Kostensenkung erreicht.

## Patentansprüche

1. Klappdeckelverschluß mit einer Klappe (10) zum Verschließen einer in einer Abdeckleiste (100) vorgesehenen Öffnung (110) zur Aufnahme der Stützfüße eines Dachlastträgers, wobei an der Klappe (10) Achsansätze (12) vorgesehen sind, mittels derer die Klappe (10) verschwenkbar ist, sowie mit Lagerelementen (20,30), in denen die Achsansätze (12) drehbar aufgenommen sind,
**dadurch gekennzeichnet,**
**daß** wenigstens eines der Lagerelemente (20,30) ein Federelement (22,32) sowie ein Arretierungselement (22,36) aufweist, wobei das Arretierungselement (22,36) derart ausgeführt ist, daß dieses in der Schließ- sowie in der Offenstellung der Klappe (10) in Drehrichtung der Klappe (10) formschlüssig mit dem in dem Lagerelement (20,30) aufgenommenen Achsansatz (12) in Verbindung steht, und wobei das Federelement (22,32) derart angeordnet ist, daß die Klappe (10) entgegen der vom Federelement (22,32) ausgeübten Federkraft aus einer arretierten Position verschwenkbar ist.

2. Klappdeckelverschluß nach Anspruch 1, **dadurch gekennzeichnet, daß** das Arretierungselement (22) das Federelement (22) umfaßt.

3. Klappdeckelverschluß nach Anspruch 1 oder 2, **dadurch gekennzeichnet, daß** das Federelement (22) derart ausgeführt ist, daß auf den Achsansatz (12) eine radial auf diesen wirkende Kraft ausübbar ist.

4. Klappdeckelverschluß nach einem oder mehreren der Ansprüche 1 bis 3, **dadurch gekennzeichnet, daß** wenigstens einer der Achsansätze (12) einen im wesentlichen L-förmigen Bereich (16) aufweist, und der Achsansatz (12) derart angeordnet ist, daß je einer der Schenkel des L-förmigen Bereiches (16) in der Schließ- sowie in der Offenstellung auf einer Fläche (23) des Federelementes (22) aufliegt, die durch das Verschwenken der Klappe (10) bewegbar ist.

5. Klappdeckelverschluß nach einem oder mehreren der Ansprüche 1 bis 4, **dadurch gekennzeichnet, daß** das Lagerelement (20,30) zwei Bereiche zur Lagerung des Achsansatzes (12) aufweist, zwischen denen das Federelement (22) angeordnet ist.

6. Klappdeckelverschluß nach Anspruch 1 oder 2, **dadurch gekennzeichnet, daß** das Federelement (32) derart ausgeführt ist, daß auf den Achsansatz (12) eine axial auf diesen wirkende Kraft ausübbar ist.

7. Klappdeckelverschluß nach Anspruch 6, **dadurch gekennzeichnet, daß** das Federelement (32) als elastisch verformbarer Bereich der Wandung des Lagerelementes (30) ausgeführt ist.

8. Klappdeckelverschluß nach Anspruch 6 oder 7, **dadurch gekennzeichnet, daß** der Achsansatz (12) wenigstens einen sich axial erstreckenden Vorsprung (35) aufweist, der in in Umfangsrichtung beabstandeten Aussparungen (36) des Lagerelementes (30) aufnehmbar ist.

9. Klappdeckelverschluß nach Anspruch 8, **dadurch gekennzeichnet, daß** der Achsansatz (12) einen Bereich (13) vergrößerten Durchmessers aufweist, und der sich axial erstreckende Vorsprung (35) an einer Stirnfläche dieses Bereiches (13) angeordnet ist.

10. Klappdeckelverschluß nach einem oder mehreren der Ansprüche 1 bis 9, **dadurch gekennzeichnet, daß** die Lagerelemente (20,30) als Kunststoff-Formteile ausgeführt sind.

11. Klappdeckelverschluß nach einem oder mehreren der Ansprüche 1 bis 10, **dadurch gekennzeichnet, daß** die Lagerelemente (20,30) auf ihren Außenseiten Vorsprünge (24) zur Arretierung in der Abdeckleiste (100) aufweisen.

## Claims

1. Snap cover-type closure having a flap (10) for closing an opening (110) which is provided in a cover strip (100) and is intended for receiving the supporting feet of a roof rack, axle-type projections (12), by means of which the flap (10) can be pivoted, being provided on the flap (10), and having bearing elements (20, 30) in which the axle-type projections (12) are held rotatably, **characterized in that** at least one of the bearing elements (20, 30) has a spring element (22, 32) and a locking element (22, 34), the locking element (22, 34) being designed in such a manner that, in the closed position and in the open position of the flap (10), it is connected in a form-fitting manner, in the direction of rotation of the flap (10), to the axle-type projection (12) held in the bearing element (20, 30), and the spring element (22, 32) being arranged in such a manner that the flap (10) can be pivoted out of a locked position counter to the spring force exerted by the spring element (22, 32).

2. Snap cover-type closure according to Claim 1, **characterized in that** the locking element (22) comprises the spring element (22).

3. Snap cover-type closure according to Claim 1 or 2, **characterized in that** the spring element (22) is designed in such a manner that a force can be exerted on the axle-type projection (12), which force acts radially on the latter.

4. Snap cover-type closure according to one or more of Claims 1 to 3, **characterized in that** at least one of the axle-type projections (12) has an essentially L-shaped region (16), and the axle-type projection (12) is arranged in such a manner that, in the closed position and in the open position, in each case one of the limbs of the L-shaped region (16) rests on a surface (23) of the spring element (22), which surface can be moved by the pivoting of the flap (10).

5. Snap cover-type closure according to one or more of Claims 1 to 4, **characterized in that** the bearing element (20, 30) has two regions for the mounting of the axle-type projection (12), the spring element (22) being arranged between the said regions.

6. Snap cover-type closure according to Claim 1 or 2, **characterized in that** the spring element (32) is designed in such a manner that a force can be exerted on the axle-type projection (12), which force acts axially on the latter.

7. Snap cover-type closure according to Claim 6, **characterized in that** the spring element (32) is designed as an elastically deformable region of the wall of the bearing element (30).

8. Snap cover-type closure according to Claim 6 or 7, **characterized in that** the axle-type projection (12) has at least one lug (35) which extends axially and can be held in cutouts (36) in the bearing element (30), which cutouts are spaced apart in the circumferential direction.

9. Snap cover-type closure according to Claim 8, **characterized in that** the axle-type projection (12) has a region (13) of enlarged diameter, and the axially extending lug (35) is arranged on an end surface of this region (13).

10. Snap cover-type closure according to one or more of Claims 1 to 9, **characterized in that** the bearing elements (20, 30) are designed as plastic shaped parts.

11. Snap cover-type closure according to one or more of Claims 1 to 10, **characterized in that** the bearing elements (20, 30) have lugs (24) on their outsides for locking in the cover strip (100).

## Revendications

1. Fermeture à couvercle basculant avec un rabat (10) pour fermer une ouverture (110) prévue dans une baguette de recouvrement (100), pour la réception des pieds d'appui d'un support de charge de poids, où sont prévus au rabat (10) des bouts rapportés d'axe (12) au moyen desquels le rabat (10) peut pivoter, et avec des éléments de palier (20, 30) dans lesquels sont reçus d'une manière tournante les bouts rapportés d'axe (12), **caractérisée en ce qu'**au moins l'un des éléments de palier (20, 30) présente un élément à ressort (22, 32) ainsi qu'un élément d'arrêt (22, 34), où l'élément d'arrêt (22, 34) est réalisé de façon que celui-ci, en position de fermeture et en position d'ouverture du rabat (10), en direction de rotation du rabat (10), est en liaison par concordance des formes avec le bout d'axe (12) reçu dans l'élément de palier (20, 30), et où l'élément à ressort (22, 32) est disposé de telle sorte que le rabat (10) peut être amené à pivoter contre la force de ressort exercée par l'élément à ressort (22, 32) hors d'une position arrêtée.

2. Fermeture à couvercle basculant selon la revendication 1, **caractérisée en ce que** l'élément d'arrêt (22) comprend l'élément à ressort (22).

3. Fermeture à couvercle basculant selon la revendication 1 ou 2, **caractérisée en ce que** l'élément à ressort (22) est réalisé de façon que puisse être exercée sur le bout d'axe (12) une force agissant radialement sur celui-ci.

4. Fermeture à couvercle basculant selon l'une ou plusieurs des revendications 1 à 3, **caractérisée en ce qu'**au moins l'un des bouts d'axe (12) présente une zone (16) sensiblement en forme de L, et **en ce que** le bout d'axe (12) est disposé de façon que respectivement l'une des branches de la zone en forme de L (16) s'applique en position de fermeture et en position d'ouverture sur une face (23) de l'élément à ressort (22) qui est déplaçable par le pivotement du rabat (10).

5. Fermeture à couvercle basculant selon l'une ou plusieurs des revendications 1 à 4, **caractérisée en ce que** l'élément de palier (20, 30) présente deux zones pour loger le bout d'axe (12) entre lesquelles est disposé l'élément à ressort (22).

6. Fermeture à couvercle basculant selon la revendication 1 ou 2, **caractérisée en ce que** l'élément à ressort (32) est réalisé de façon que puisse être exercée sur le bout d'axe (12) une force agissant axialement sur celui-ci.

7. Fermeture à couvercle basculant selon la revendication 6, **caractérisée en ce que** l'élément à ressort (32) est réalisé sous forme de zone déformable élastiquement de la paroi de l'élément de palier (30).

8. Fermeture à couvercle basculant selon la revendication 6 ou 7, **caractérisée en ce que** le bout d'axe (12) présente au moins une saillie (35) s'étendant axialement qui peut être reçue dans des évidements (36) espacés dans la direction périphérique de l'élément de palier (30).

9. Fermeture à couvercle basculant selon la revendication 8, **caractérisée en ce que** le bout d'axe (12) présente une zone (13) d'un plus grand diamètre, et **en ce que** la saillie (35) s'étendant axialement est disposée à une face frontale de cette zone (13).

10. Fermeture à couvercle basculant selon l'une ou plusieurs des revendications 1 à 9, **caractérisée en ce que** les éléments de palier (20, 30) sont réalisés sous forme de pièces moulées en matière synthétique.

11. Fermeture à couvercle basculant selon l'une ou plusieurs des revendications 1 à 10, **caractérisée en ce que** les éléments de palier (20, 30) présentent sur leurs côtés extérieurs des saillies (24) pour l'arrêtage dans la baguette de recouvrement (100).
